**Europäisches Patentamt**

**European Patent Office**

**Office européen des brevets**

(19)

(11) Veröffentlichungsnummer: **0 198 211
B1**

(12) **EUROPÄISCHE PATENTSCHRIFT**

(45) Veröffentlichungstag der Patentschrift:
08.08.90

(51) Int. Cl.⁵: **B60N 2/32**

(21) Anmeldenummer: **86103184.7**

(22) Anmeldetag: **10.03.86**

(54) Lager- und Verriegelungsvorrichtung, insbesondere für verschwenkbare Hintersitz-Rückenlehnen von Kraftfahrzeugen.

(30) Priorität: **17.04.85 DE 3513807**

(43) Veröffentlichungstag der Anmeldung:
**22.10.86 Patentblatt 86/43**

(45) Bekanntmachung des Hinweises auf die Patenterteilung:
**08.08.90 Patentblatt 90/32**

(84) Benannte Vertragsstaaten:
**DE FR GB IT**

(56) Entgegenhaltungen:
**DE-C- 3 140 002
FR-A- 1 508 000**

(73) Patentinhaber: **Adam Opel Aktiengesellschaft,
Bahnhofsplatz 1 Postfach 1560,
D-6090 Rüsselsheim(DE)**

(72) Erfinder: **Schrom, Ralf, Dipl.-Ing. (FH),
Dolomitenstrasse 1, D-6090 Rüsselsheim 7(DE)**
Erfinder: **Baltes, Horst, Dipl.-Ing. (FH), Eddersheimer
Strasse 36, D-6093 Flörsheim(DE)**

(74) Vertreter: **Rosenfeld, Jürgen, Dipl. Ing. et al, Adam Opel
Ag Patentabteilung Bahnhofsplatz 1 Postfach 17 10.
D-6090 Rüsselsheim(DE)**

## Beschreibung

Die Erfindung bezieht sich auf eine Lager- und Verriegelungsvorrichtung, insbesondere zur Verriegelung verschwenkbarer Hintersitz-Rückenlehnen von Kraftfahrzeugen, mit einem Lager- bzw. Schloßgehäuse zur Aufnahme eines zu lagernden Bolzens bzw. eines Verriegelungselements, einem beweglich am Lager- bzw. Schloßgehäuse gelagerten, gegen Federwiderstand in Richtung "Lösungsstellung" betätigbaren Sperrelement und einem am Sperrelement angreifenden Betätigungselement.

Es ist bekannt, Vorrichtungen zur Lagerung von Aggregaten so auszubilden, da die gelagerten Teile leicht entfernt werden können. Es handelt sich dabei zumeist um aus mehreren Teile montierte Konstruktionen oder um elastische Lagerschalen, die eine kraftschlüssige Verbindung erzeugen.

Eine häufig verwendete Anwendungsmöglichkeit von Vorrichtungen der eingangs genannten Art liegt im Pkw-Bau, und zwar bezüglich einer lösbaren Verriegelung verschwenkbarer Hintersitz-Rückenlehnen. Derartige sogenannte Hinterrückenschlösser - vgl. beispielsweise die DE-PS 3 140 002 - bestehen in der Regel aus mehreren zu montierenden Einzelteilen, insbesondere Schloßgehäuse, Schließteil, Lagerbolzen, Federn und diverse Betätigungselemente. Der Nachteil bekannter Lager- und Verriegelungsvorrichtungen ist im wesentlichen in einem großen Einzelteilaufwand und hohen Kosten für Werkzeuge und Vormontage zu sehen.

Aufgabe der vorliegenden Erfindung ist es daher, eine Vorrichtung der eingangs bezeichneten Art zu schaffen, die aus möglichst wenigen Einzelteilen besteht und einfach herstellbar ist.

Erfindungsgemäß wird die Aufgabe dadurch gelöst, daß Lager- bzw. Schloßgehäuse und Sperrelement einteilig aus Kunststoff ausgebildet sind, wobei das Sperrelement durch einen Steg an das Lager- bzw. Schloßgehäuse angeformt ist, und daß der Steg zugleich als Schwenklager und als Federelement für das Sperrelement dient. Hierbei kann das aus den Bestandteilen Lager- bzw. Schloßgehäuse und Sperrelement, einschließlich Steg, bestehende gemeinsame Bauteil zweckmäßigerweise als Spritzteil ausgebildet und aus Polyamid oder aus POM gefertigt sein.

Die erfindungsgemäße Lager- und Verriegelungsvorrichtung läßt sich - wie im vorstehenden angedeutet - in einfacher Weise herstellen, wobei die Anzahl der Einzelteile bis auf das Minimum von zwei Teilen, nämlich Lager- bzw. Schloßgehäuse, Sperrelement und Betätigungselement einerseits sowie zu lagernder Bolzen bzw. Verriegelungselement andererseits, reduziert werden kann.

Die erfindungsgemäße Lager- und Verriegelungsvorrichtung läßt sich sehr vielseitig verwenden. Eine bevorzugte Anwendungsmöglichkeit besteht in ihrem Einsatz zur lösbaren Verriegelung einer verschwenkbaren Hintersitz-Rückenlehne von Kraftfahrzeugen. Hierzu ist eine vorteilhafte Ausgestaltung der Erfindung besonders geeignet, die sich dadurch auszeichnet, daß an dem Schloßgehäuse - senkrecht oder im wesentlichen senkrecht zur Mittelhauptebene desselben - eine Befestigungsplatte einstückig angeformt ist, mittels derer das Schloßgehäuse an der Hintersitz-Rückenlehne befestigbar ist, und daß die Befestigungsplatte eine mit dem Einführungskanal für das Verriegelungselement verbundene Durchtrittsöffnung für das Verriegelungselement aufweist, und daß das Verriegelungselement karosserieseitig befestigt und mit Bezug auf das Schloßgehäuse derart angeordnet ist, daß es bei einem Verschwenken der Hintersitz-Rückenlehne mit dem Schloßgehäuse in Eingriff bzw. (bei entriegelter Stellung des Sperrelements) von dem Schloßgehäuse außer Eingriff gebracht werden kann.

Andere vorteilhafte Weiterbildungen des Grundgedankens der Erfindung sind den Unteransprüchen zu entnehmen.

Zur näheren Erläuterung der Erfindung sind in der Zeichnung Ausführungsbeispiele dargestellt, die im folgenden beschrieben werden. Es zeigt:

Fig. 1 eine Ausführungsform einer Lager- und Verriegelungsvorrichtung, in perspektivischer Darstellung,

Fig. 2 den Gegenstand von Fig. 1 in Ansicht (Pfeilrichtung A) betrachtet,

Fig. 3 eine Seitenansicht des Gegenstandes nach Figur 1 und 2, in Pfeilrichtung B (Fig. 2) gesehen,

Fig. 4 eine teilweise Darstellung des Gegenstandes von Fig. 1 bis 3, in Ansicht entsprechend Fig. 2,

Fig. 5 eine weitere Teilansicht entsprechend Fig. 2 und 4,

Fig. 6 eine Teilansicht der linken Seite einer Hintersitz-Rückenlehne für Fahrzeuge (Rückenlehnenverkleidung und -polsterung weggelassen), von vorn, gegen die Fahrtrichtung gesehen,

Fig. 7 eine Ausführungsform für eine Verriegelungsvorrichtung der Rückenlehne nach Fig. 6 in Ansicht, jedoch in gegenüber Fig. 6 vergrößerter Darstellung und in Fahrtrichtung gesehen,

Fig. 8 die Verriegelungsvorrichtung nach Fig. 7, in Seitenansicht, und

Fig. 9 einen Schnitt längs der Linie IX-IX in Fig. 7.

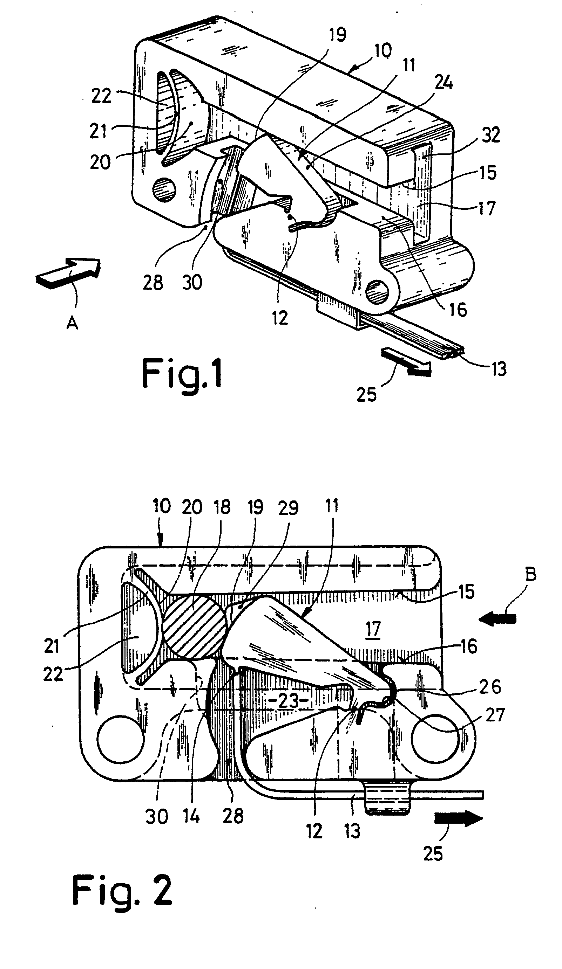

Nach Fig. 1 bis 5 bezeichnet 10 ein Lager- oder Schloßgehäuse und 11 ein Sperrelement, welches durch einen Steg 12 einstückig an das Lager- bzw. Schloßgehäuse 10 angeformt ist. Der Steg 12 dient gleichzeitig als Schwenklager und als Federelement für das Sperrelement 11. Mit 13 ist ein Betätigungselement für das Sperrelement 11 beziffert. Das Betätigungselement 13 ist bei 14 einstückig an das Sperrelement 11 angeformt. Die genannten Teile 10-14 bilden also ein einziges gemeinsames Bauteil, welches zweckmäßigerweise als Kunststoff-Spritzteil in einem einzigen Arbeitsgang hergestellt werden kann. Hierdurch wird eine wesentliche Verringerung der Herstellungs- und Montagekosten erreicht.

Wie weiterhin aus Fig. 1-5 ersichtlich ist, weist das Lager- bzw. Schloßgehäuse 10 einen durch zwei parallele Führungsflächen 15, 16 gebildeten bzw. begrenzten Einführungskanal 17 für ein dem Lager- bzw. Schloßgehäuse 10 zu lagerndes bzw. zu verriegelndes Teil auf. Bei der Ausführungsform nach Fig. 1-5 ist ein solches zu verriegelndes Teil als Bolzen ausgebildet und mit 18 bezeichnet. Wie insbesondere Fig. 1 und 2 erkennen lassen, ist das Sperrelement 11 unter der Federwirkung des Steges 12 seitlich in den Einführungskanal 17 einschwenkbar. Bei dieser, z.B. aus Fig. 2 ersichtlichen, eingeschwenkten Stellung des Sperrelements 11 handelt es sich um die Verriegelungsstellung der Vorrichtung. Hierbei ist der zu verriegelnde Bolzen 18 zwischen einer vorderen, leicht gekrümmten Fläche 19 des Sperrelements 11 einerseits und durch eine am geschlossenen Ende des Einführungskanals 17 ausgebildete, federnde Anlagefläche 20 andererseits fixiert. Fig. 1, 2 und 4 machen deutlich, daß die Anlagefläche 20 durch ein blattfederartig ausgebildetes Teil 21 gebildet wird, welches in Richtung auf den Bolzen 18 bogenförmig konvex gekrümmt ausgestaltet ist. Hinter dem blattfederartigen Teil 21 befindet sich ein Hohlraum 22, der eine federnde Nachgiebigkeit des blattfederartigen Teils 21 ermöglicht.

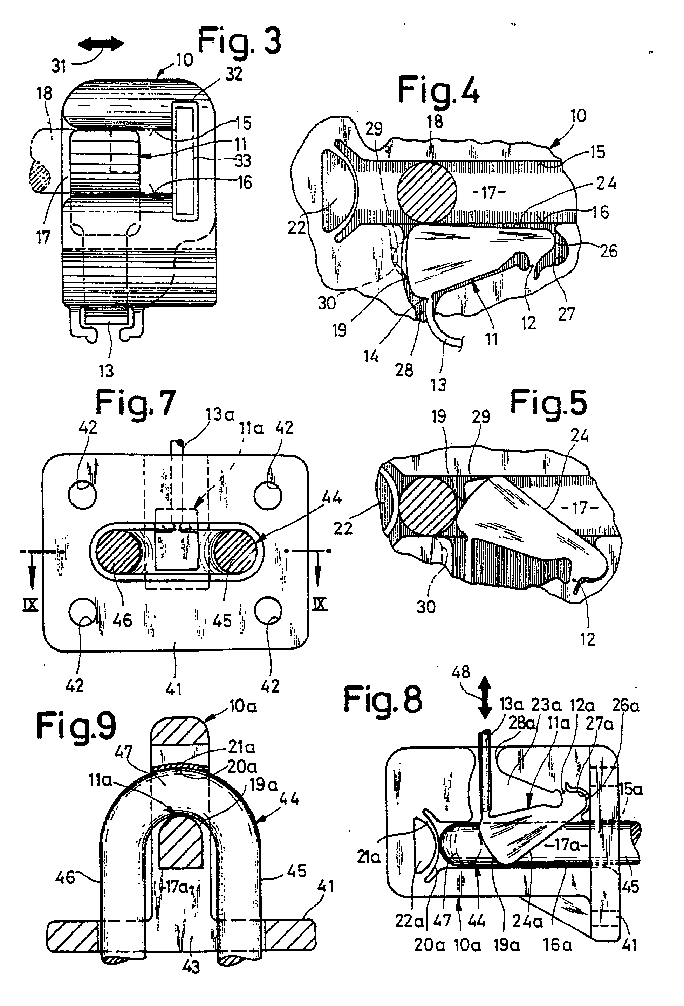

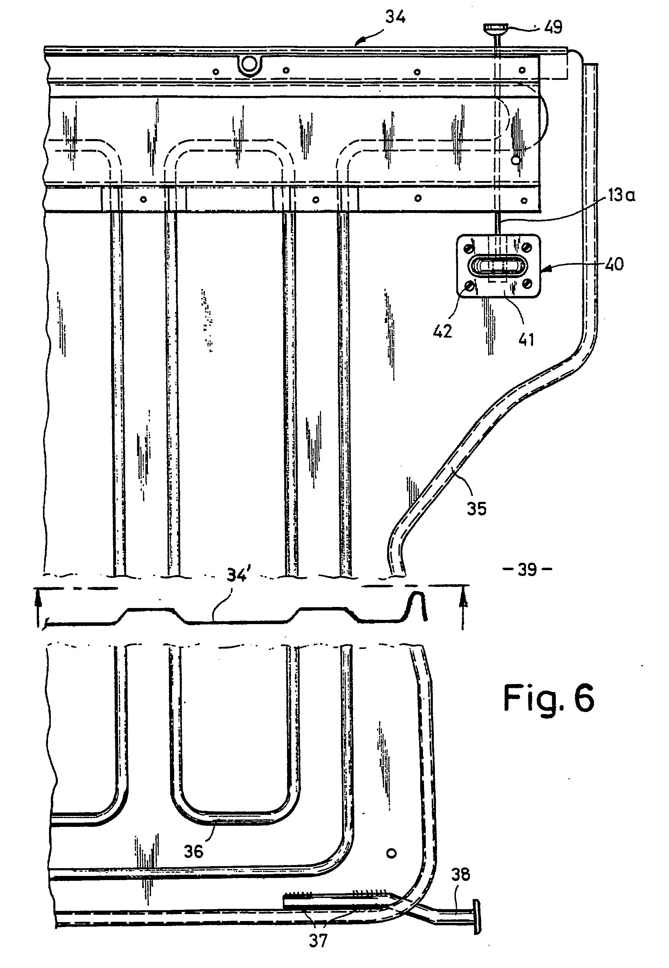

Im Lager- bzw. Schloßgehäuse 10 ist des weiteren eine den Konturen des Sperrelements 11 entsprechende Aussparung 23 eingeformt, die - wie Fig. 4 zeigt - zur Aufnahme des Sperrelements 11 in dessen entriegelter Stellung dient. Fig. 4 macht ferner deutlich, daß in dieser entriegelten Stellung das Sperrelements 11 eine - mit 24 bezeichnete - Seitenfläche des Sperrelements 11 zugleich einen Bestandteil der einen Führungsfläche, (16) des Einführungskanals 17 bildet. In entriegelter Stellung der Vorrichtung erleichtert somit das Sperrelement 11 die Einführung des Bolzens 18 in den Einführungskanal 17. Um das Sperrelement 11 in die aus Fig. 4 ersichtliche Entriegelungsstellung zu bringen, ist an dem als Seilzug ausgebildeten Betätigungselement 13 eine Zugkraft in Richtung 25 aufzubringen, wobei gleichzeitig der Federwiderstand des Steges 12 überwunden werden muß. Sobald der zu verriegelnde Bolzen 18 seine aus Fig. 2 ersichtliche Endposition erreicht hat, kann das Betätigungselement 13 entlastet werden, und das Sperrelement 11 kehrt aufgrund der Federwirkung des Steges 12 selbsttätig in die aus Fig. 2 ersichtliche Verriegelungsstellung zurück.

Um die auf den Bolzen 18 in dessen Verriegelungsposition evtl. einwirkenden Kräfte, die dieser auf das Sperrelement 11 überträgt, aufnehmen zu können, besitzt das Sperrelement 11 an seiner vom zu verriegelnden Bolzen 18 abgewandten Rückseite eine Anlagefläche 26, die mit einer komplementären, am Lager- bzw. Schloßgehäuse 10 ausgebildeten Gegenanlagefläche 27 zusammenwirkt, derart, daß vom Bolzen 18 auf das Sperrelement 11 ausgeübte Kräfte vom Sperrelement 11 unmittelbar auf das Lager- bzw. Schloßgehäuse 10 übertragen werden. Hierbei ist die Anlagefläche 26 am Sperrelement 11 konvex und die Gegenanlagefläche 27 am Lager- bzw. Schloßgehäuse 10 entsprechend konkav gekrümmt ausgebildet.

Wie die Zeichnung, insbesondere Fig. 2 und 4, weiterhin erkennen läßt, ist das seitlich an dem Sperrelement (bei 14) angeformte Betätigungselement 13 durch einen in das Lager- bzw. Schloßgehäuse 10 eingeformten Schlitz 28, der mit der Aussparung 23 räumlich verbunden ist, nach außen geführt. Der Verriegelungsbolzen 18 kann drehfest oder drehbeweglich - bei Anwendung zur Verriegelung einer Hintersitz-Rückenlehne zweckmäßig an der Rückenlehne - angeordnet und das Schloß-Bauteil (Teile 10 - 14) in diesem Falle karosserieseitig festgelegt sein. Für den Fall einer drehbeweglichen Ausbildung des Bolzens 18, beispielsweise bei Anwendung an einer aus der Rückenlehne schwenkbaren und herausnehmbaren Armlehne ist - wie die Fig. 2, 4 und 5 deutlich machen - an der mit dem zu verriegelnden Bolzen 18 zusammenwirkenden Fläche 19 des Sperrelements 11 eine Hinterschneidung 29 angeformt, die in entriegelter Stellung des Sperrelements (Fig. 4) mit einer entsprechenden Hinterschneidung 30 im Lager- bzw. Schloßgehäuse 10 zusammenwirkt. Hierdurch soll ein unbeabsichtigtes Entriegeln verhindert werden, wenn bei Armlehnenbelastung gegen das Sperrelement 11, verbunden mit einer Drehbewegung des Bolzens etwa im Uhrzeigersinn, durch Reibschluß zwischen Bolzen 18 und Sperrelement 11 letzteres in Entriegelungsrichtung mitgenommen werden könnte. Die Hinterschneidung 29 verhindert solches und bewirkt zugleich eine Fixierung des Sperrelements 11 in Querrichtung in seiner entriegelten Stellung.

Auch der zu verriegelnde Bolzen 18 ist - wie Fig. 3 erkennen läßt - in Querrichtung (Doppelpfeil 31) fixiert. Zu diesem Zweck ist in das Lager- bzw. Schloßgehäuse 10 ein Längsschlitz 32 eingeformt, der mit dem Einführungskanal 17 bzw. den Führungsflächen 15, 16 nach Art einer T-Führung korrespondiert. Als Gegenstück zu dem Schlitz 32 besitzt der Bolzen 18 ein abgesetztes verbreitertes Ende 33, welches mit dem Schlitz 32 zusammenwirkt respektive in diesen eingeführt wird.

Fig. 7 - 9 zeigen nun eine gegenüber der Ausführungsform nach Fig. 1 - 5 etwas abgewandelte Ausführungsform einer Verriegelungsvorrichtung, die insbesondere zur Anwendung an verschwenkbaren Hintersitz-Rückenlehnen von Personenkraftfahrzeugen vorgesehen ist. Eine solche Anwendung zeigt Fig. 6. Dort bezeichnet 34 ein Lehnenblechformteil mit einem angeformten, umlaufenden Kanal 35 zur - wie allgemein üblichen - Befestigung eines Polsterbezuges. Übliche mäanderförmig gewundene Versteifungssicken der Rückenlehne sind mit 36 beziffert und ergeben das mit 34' bezeichnete Querschnittsbild des Rückenlehnenbleches 34. Ein an der äußeren unteren Kante des Rückenlehnenbleches 34 an der Stelle 37 angeschweißter Lagerzapfen 38 dient zur karosserieseitigen Anlenkung der Rückenlehne an dem linken hinteren Radkasten (nicht gezeigt) des Fahrzeuges, der sich im Bereich einer durch eine seitlich nach innen gebogene Ausbildung des Bleches 34 gebildeten mit 39 bezeichneten Aussparung erstreckt.

Eine entsprechende achssymmetrisch gleichartige Ausgestaltung des Rückenlehnenbleches 34 ist auch auf der rechten, in Fig. 6 nicht gezeigten Seite des Rückenlehnenbleches 34 vorgesehen.

Um die Rückenlehne bzw. das Rückenlehnenblech 34 in der hochgeklappten Normalstellung mit der Fahrzeugkarosserie verriegeln zu können, ist eine in Fig. 6 insgesamt mit 40 bezifferte Verriegelungsvorrichtung vorgesehen. Die Bestandteile und die Funktionsweise dieser Verriegelungsvorrichtung sind nun im einzelnen aus Fig. 7-9 entnehmbar. Danach ist - ähnlich wie bei der Ausführungsform nach Fig. 1-5 - ein als einteiliges Kunststoff-Spritzteil ausgebildetes Schloßgehäuse 10a vorgesehen. Auch weitere Bestandteile der Verriegelungsvorrichtung nach Fig. 7-9 ähneln der Ausführungsform nach Fig. 1-5, so daß die betreffenden Teile nicht noch einmal beschrieben zu werden brauchen. Zur Verdeutlichung der Übereinstimmung in Konstruktion bzw. Funktionsweise sind lediglich die betreffenden Teile mit denselben Bezugszeichen wie in Fig. 1-5 - lediglich ergänzt durch den Zusatz a - versehen. Die folgenden Ausführungen beschränken sich daher im wesentlichen nur auf die Unterschiede der Ausführungsform nach Fig. 7-9 gegenüber derjenigen nach Fig. 1-5.

Wie insbesondere aus Fig. 9 hervorgeht, ist an dem Schloßgehäuse 10a - senkrecht zur Erstreckung desselben - eine Befestigungsplatte 41 einstückig angeformt. Die Befestigungsplatte 41 besitzt vier Durchgangsbohrungen 42, mittels derer das Schloßgehäuse 10a in der aus Fig. 6 ersichtlichen Position, z.B. durch Verschrauben, an der Hintersitz-Rückenlehne 34 befestigt werden kann. Die Befestigungsplatte 41 weist ferner eine mit dem Einführungskanal 17a räumlich verbundene Durchtrittsöffnung 43 auf, die - wie insbesondere aus Fig. 7 hervorgeht - länglich ausgebildet ist. Die Durchtrittsöffnung 43 ist vorgesehen, um ein mit 44 bezeichnetes Verriegelungselement in das Schloßgehäuse 10a einführen zu können. Das Verriegelungselement 44 ist (in nicht näher gezeigter Weise) karosserieseitig befestigt, während das Schloßgehäuse 10a ja, wie gesagt, an der Hintersitz-Rückenlehne 34 angebracht ist. Bei der Variante nach Fig. 7-9 besteht nun ein wesentlicher Unterschied gegenüber der Ausführungsform nach Fig. 1-5 darin, daß das Verriegelungselement 44 nicht als Bolzen, sondern vielmehr U-förmig ausgebildet ist. Fig. 9 macht deutlich, daß das Verriegelungselement 44 in Verriegelungsstellung so mit dem Schloßgehäuse 10a zusammenwirkt, daß die beiden mit 45 bzw. 46 bezifferten U-Schenkel der Verriegelungsvorrichtung 44 jeweils beidseitig des Einführungskanals 17a außerhalb des Schloßgehäuses 10a zu liegen kommen. Der mit 47 bezeichnete U-Steg des Verriegelungselements 44 kommt dagegen, wie Fig. 8 und 9 erkennen lassen, einerseits mit der federnden Anlagefläche 20a zur Anlage und wird andererseits von dem in Sperrstellung befindlichen Sperrelement 11a hintergriffen.

Das Einführen des Verriegelungselements 44 in die aus Fig. 7-9 ersichtliche Sperrstellung erfolgt zweckmäßigerweise selbsttätig, d.h. beim Nach-hinten-Verschwenken der Hintersitz-Rückenlehne 34 in die aufrechte Normalposition. Hierbei wird dann das Sperrelement 11a entgegen der Federwirkung des Steges 12a durch das Verriegelungselement 44 nach oben gedrückt und rastet anschließend hinter dem U-Steg 47 des Verriegelungselements 44 in die aus Fig. 7-9 ersichtliche Sperrstellung selbsttätig aufgrund des unter Federvorspannung stehenden Steges 12a ein. Zur Entriegelung ist lediglich an dem Betätigungselement 13a eine Zugkraft in Pfeilrichtung 48 aufzubringen. Zu diesem Zweck ist am oberen Ende des Betätigungselements 13a - wie Fig. 6 erkennen läßt - ein Betätigungsknopf 49 angebracht.

## Patentansprüche

1. Lager- und Verriegelungsvorrichtung, insbesondere zur Verriegelung verschwenkbarer Hintersitz-Rückenlehnen von Kraftfahrzeugen, mit einem Lager- bzw. Schloßgehäuse zur Aufnahme eines zu lagernden Bolzens bzw. eines Verriegelungselementes, einem beweglichen am Lager- bzw. Schloßgehäuse gelagerten, gegen Federwiderstand in Richtung "Lösungsstellung" betätigbaren Sperrelement und einem am Sperrelement angreifenden Betätigungselement, dadurch gekennzeichnet, daß Lager- bzw. Schloßgehäuse (10, 10a) und Sperrelement (11, 11a) einteilig aus Kunststoff ausgebildet sind, wobei das Sperrelement (11, 11a) durch einen Steg (12, 12a) an das Lager- bzw. Schloßgehäuse (10, 10a) angeformt ist, und daß der Steg (12, 12a) zugleich als Schwenklager und als Federelement für das Sperrelement (11, 11a) dient.

2. Lager- und Verriegelungsvorrichtung nach Anspruch 1, dadurch gekennzeichnet, daß das aus den Bestandteilen Lager- bzw. Schloßgehäuse (10, 10a), Sperrelement (11, 11a), einschließlich Steg (12, 12a) bestehende gemeinsame Bauteil als Spritzteil ausgebildet und aus Polyamid oder POM gefertigt ist.

3. Lager- und Verriegelungsvorrichtung nach Anspruch 1 oder 2, dadurch gekennzeichnet, daß das Sperrelement (11, 11a) an seiner vom zu lagernden Bolzen (18) bzw. Verriegelungselement (44) abgewandten Rückseite eine Anlagefläche (26, 26a) aufweist, die mit einer komplementären, am Lager- bzw. Schloßgehäuse (10, 10a) ausgebildeten Gegenanlagefläche (27, 27a) zusammenwirkt, derart, daß vom Bolzen (18) bzw. Verriegelungselement (44) auf das Sperrelement (11 bzw. 11a) ausgeübte Kräfte vom Sperrelement (11 bzw. 11a) unmittelbar auf das Lager- bzw. Schloßgehäuse (10, 10a) übertragen werden.

4. Lager- und Verriegelungsvorrichtung nach Anspruch 3, dadurch gekennzeichnet, daß die Anlagefläche (26, 26a) am Sperrelement (11, 11a) konvex und die Gegenanlagefläche (27, 27a) am Lager- bzw. Schloßgehäuse (10, 10a) entsprechend konkav gekrümmt ausgebildet ist.

5. Lager- und Verriegelungsvorrichtung nach Anspruch 1, 2, 3 oder 4, dadurch gekennzeichnet, daß an dem Bolzen (18) bzw. Verriegelungselement (44) zugewandten Ende (19, 19a) des Sperrelements (11, 11a) - seitlich - ein als Seilzug ausgebildetes Betätigungselement (13, 13a) einstückig angeformt und durch einen in das Lager- bzw. Schloßgehäuse (10, 10a) eingeformten Schlitz (28, 28a) nach außen geführt ist.

6. Lager- und Verriegelungsvorrichtung nach einem oder mehreren der vorstehenden Ansprüche, dadurch gekennzeichnet, daß das Lager- bzw. Schloßgehäuse (10, 10a) einen durch zwei parallele oder im wesentlichen parallele Führungsflächen (15, 16; 15a, 16a) gebildeten bzw. begrenzten Einführungskanal (17, 17a) für den zu lagernden Bolzen (18) bzw. für das Verriegelungselement (44) aufweist, in welchen Einführungskanal das Sperrelement (11, 11a) unter Federwirkung seitlich einschwenkbar ist.

7. Lager- und Verriegelungsvorrichtung nach Anspruch 6, dadurch gekennzeichnet, daß im Lager- bzw. Schloßgehäuse (10, 10a) eine den Konturen des Sperrelements (11, 11a) entsprechende Aussparung (23, 23a) eingeformt ist, die zur Aufnahme des Sperrelements (11, 11a) in dessen entriegelter Stellung dient, und daß in entriegelter Stellung des Sperrelements (11, 11a) eine Seitenfläche (24, 24a) desselben zugleich einen Bestandteil einer der beiden Führungsflächen (15, 16; 15a, 16a) des Einführungskanals (17, 17a) bildet.

8. Lager- und Verriegelungsvorrichtung nach Anspruch 6 oder 7, dadurch gekennzeichnet, daß am geschlossenen Ende des Einführungskanals (17, 17a) eine federnde Anlagefläche (20, 20a) für den zu lagernden Bolzen (18) bzw. für das Verriegelungselement (44) ausgebildet ist.

9. Lager- und Verriegelungsvorrichtung nach Anspruch 8, dadurch gekennzeichnet, daß die Anlagefläche (20, 20a) bzw. das sie bildende Teil (21, 21a) blattfederartig und auf der dem Bolzen (18) bzw. auf dem Verriegelungselement (44) zugewandten Seite bogenförmig konvex gekrümmt ausgebildet ist.

10. Lager- und Verriegelungsvorrichtung nach einem oder mehreren der vorstehenden Ansprüche, dadurch gekennzeichnet, daß an der mit dem zu lagernden Bolzen (18) bzw. dem Verriegelungselement (44) zusammenwirkenden Fläche (19) des Sperrelements (11) eine Hinterschneidung (29) angeformt ist, die in entriegelter Stellung des Sperrelements mit einer entsprechenden Hinterschneidung (30) im Lager- bzw. Schloßgehäuse (10) zusammenwirkt.

11. Lager- und Verriegelungsvorrichtung nach einem oder mehreren der vorstehenden Ansprüche, dadurch gekennzeichnet, daß an dem Schloßgehäuse (10a) – senkrecht oder im wesentlichen senkrecht zur Mittelhauptebene desselben – eine Befestigungsplatte (41) einstückig angeformt ist, mittels derer das Schloßgehäuse (10a) an der Hintersitz-Rückenlehne eines Kraftfahrzeuges (34) befestigbar ist, und daß die Befestigungsplatte (41) eine mit dem Einführungskanal (17a) für das Verriegelungselement (44) verbundene Durchtrittsöffnung (43) für das Verriegelungselement (44) aufweist, und daß das Verriegelungselement (44) karosserieseitig befestigt und mit Bezug auf das Schloßgehäuse (10a) derart angeordnet ist, daß es bei einem Verschwenken der Hintersitz-Rückenlehne (34) mit dem Schloßgehäuse (10a) in Eingriff bzw. (bei entriegelter Stellung des Sperrelements (11)) von dem Schloßgehäuse (10a) außer Eingriff bringbar ist (Fig. 6 bis 9).

12. Lager- und Verriegelungselement nach Anspruch 11, dadurch gekennzeichnet, daß das Verriegelungselement (44) U-förmig ausgebildet ist, derart, daß in Verriegelungsstellung die U-Schenkel (45, 46) jeweils beidseitig des Einführungskanals (17a) außerhalb des Schloßgehäuses (10a) zu liegen kommen und der U-Steg (47) einerseits mit der federnden Anlagefläche (20a) des Einführungskanals (17a) zur Anlage kommt, andererseits von dem in den Einführungskanal (17a) eingeführten Sperrelement (11a) hintergriffen wird.

## Claims

1. Mounting and locking device, in particular for locking pivotable rear seat back rests of motor vehicles, with a mounting or lock housing for receiving a bolt to be mounted or a locking element, a catch element which is mounted movably on the mounting or lock housing and can be actuated against spring resistance in the direction of the "release position", and an actuating element engaging the catch element, characterised in that mounting or lock housing (10, 10a) and catch element (11, 11a) are made out of plastic in one piece, the catch element (11, 11a) being moulded integrally on the mounting or lock housing (10, 10a) by a web (12, 12a), and that the web (12, 12a) simultaneously serves as a pivot bearing and as a spring element for the catch element (11, 11a).

2. Mounting and locking device according to claim 1, characterised in that the common component consisting of the constituents mounting or lock housing (10, 10a) and catch element (11, 11a) including web (12, 12a) is designed as an injection moulding and made of polyamide or POM.

3. Mounting and locking device according to claim 1 or 2, characterised in that the catch element (11, 11a) comprises on its rear side facing away from the bolt (18) to be mounted or locking element (44) a contact face (26, 26a) which cooperates with a complementary counter-contact face (27, 27a) formed on the mounting or lock housing (10, 10a), in such a way that forces applied by the bolt (18) or locking element (44) to the catch element (11 or 11a) are transmitted directly by the catch element (11 or 11a) to the mounting or lock housing (10, 10a).

4. Mounting and locking device according to claim 3, characterised in that the contact face (26, 26a) on the catch element (11, 11a) is convex and the counter-contact face (27, 27a) on the mounting or lock housing (10, 10a) is concavely curved accordingly.

5. Mounting and locking device according to claim 1, 2, 3 or 4, characterised in that at the end (19, 19a) of the catch element (11, 11a) facing towards the bolt (18) or locking element (44), on the side, an actuating element (13, 13a) designed as a cable is integrally moulded and protrudes outside through a slot (28, 28a) formed in the mounting or lock housing (10, 10a).

6. Mounting and locking device according to one or more of the preceding claims, characterised in that the mounting or lock housing (10, 10a) comprises an inlet channel (17, 17a) formed or defined by two parallel or essentially parallel guide surfaces (15, 16; 15a, 16a), for the bolt (18) to be mounted or for the locking element (44), into which inlet channel the catch element (11, 11a) can be pivoted sideways under spring action.

7. Mounting and locking device according to claim 6, characterised in that in the mounting or lock housing (10, 10a) is formed a recess (23, 23a) which follows the contours of the catch element (11, 11a) and which serves to receive the catch element (11, 11a) in the released position thereof, and that in the released position of the catch element (11, 11a) a side surface (24, 24a) thereof also forms part of one of the two guide surfaces (15, 16; 15a, 16a) of the inlet channel (17, 17a).

8. Mounting and locking device according to claim 6 or 7, characterised in that at the closed end of the inlet channel (17, 17a) is formed a spring contact face (20, 20a) for the bolt (18) to be mounted or for the locking element (44).

9. Mounting and locking device according to claim 8, characterised in that the contact face (20, 20a) or the portion (21, 21a) forming it is of leaf spring-like construction and is arcuately curved convexly on the side facing towards the bolt (18) or the locking element (44).

10. Mounting and locking device according to one or more of the preceding claims, characterised in that on the surface (19) of the catch element (11) cooperating with the bolt (18) to be mounted or the locking element (44) is integrally formed an undercut region (29) which in the released position of the catch element cooperates with a corresponding undercut region (30) in the mounting or lock housing (10).

11. Mounting and locking device according to one or more of the preceding claims, characterised in that on the lock housing (10a), perpendicularly or essentially perpendicularly to the central main plane thereof, is integrally formed a fixing plate (41) by means of which the lock housing (10a) can be fixed to the rear seat back rest (34) of a motor vehicle, and that the fixing plate (41) comprises an opening (43) communicating with the inlet channel (17) for the locking element (44), for passage of the locking element (44), and that the locking element (44) is fixed to the bodywork and arranged relative to the lock housing (10a) in such a way that when the rear seat back rest (34) is pivoted, it can be brought into engagement with the lock housing (10a) or (in the released position of the catch element (11a)) out of engagement with the lock housing (10a) (Figs. 6 to 9).

12. Mounting and locking element according to claim 11, characterised in that the locking element (44) is of U-shaped construction, such that in the locked position the U-arms (45, 46) come to lie on either side of the inlet channel (17a) outside the lock housing (10a) and the U-web (47) on the one hand comes to abut against the spring contact face (20a) of the inlet channel (17a) and on the other hand is engaged from behind by the catch element (11a) introduced into the inlet channel (17a).

## Revendications

1. Dispositif de montage et de verrouillage, notamment pour le verrouillage de dossiers pivotants de siège arrières de véhicules automobiles, comprenant un boîtier de montage ou de verrouillage pour la réception d'un axe à monter ou d'un élément de verrouillage, un élément de blocage monté de façon mobile sur le boîtier de montage ou de verrouillage et pouvant être actionné, contre la résistance d'un ressort, dans le sens "position de libération", et un élément d'actionnement en contact avec l'élément de blocage, caractérisé par le fait que le boîtier de montage ou de verrouillage (10, 10a) et l'élément de blocage (11, 11a) sont réalisés d'une seule pièce en matière synthétique, l'élément de blocage (11, 11a) étant relié par un pont (12, 12a) au boîtier de montage ou de verrouillage (10, 10a), et que le pont (12, 12a) sert en même temps de palier de pivotement et d'élément-ressort pour l'élément de blocage (11, 11a).

2. Dispositif de montage et de verrouillage selon la revendication 1, caractérisé par le fait que la pièce commune, constituée par le boîtier de montage ou de verrouillage (10, 10a) l'élément de blocage (11, 11a) et le pont (12, 12a), est réalisée comme pièce moulée par injection et est fabriquée à partir de polyamide ou de POM.

3. Dispositif de montage et de verrouillage selon la revendication 1 ou 2, caractérisé par le fait que, sur sa face arrière éloignée de l'axe (18) à monter ou de l'élément de verrouillage (44), l'élément de blocage (11, 11a) présente une surface d'appui (26, 26a) qui coopère avec une surface d'appui antagoniste (27, 27a) complémentaire, réalisée sur le boîtier de montage ou de verrouillage (10, 10a), de telle manière que des forces exercées sur l'élément de blocage (11, 11a) par l'axe (18) ou l'élément de verrouillage (44) soient directement transmises par l'élément de blocage (11, 11a) au boîtier de montage ou de verrouillage (10, 10a).

4. Dispositif de montage et de verrouillage selon la revendication 3, caractérisé par le fait que la surface d'appui (26, 26a) sur l'élément de blocage (11, 11a) est réalisée sous une forme courbée convexe et la surface d'appui antagoniste (27, 27a) sur le boîtier de montage ou de verrouillage (10, 10a) est réalisée sous une forme courbée concave correspondante.

5. Dispositif de montage et de verrouillage selon la revendication 1, 2, 3 ou 4, caractérisé par le fait qu'un élément d'actionnement (13, 13a) réalisé comme câble de traction est formé d'une seule pièce avec l'élément de blocage, latéralement sur l'extrémité de l'élément de blocage (11, 11a) tournée vers l'axe (18) ou l'élément de verrouillage (44) et passe vers l'extérieur à travers une fente (28, 28a) ménagée dans le boîtier de montage ou de verrouillage (10, 10a).

6. Dispositif de montage et de verrouillage selon une ou plusieurs des revendications précédentes, caractérisé par le fait que le boîtier de montage ou de verrouillage (10, 10a) présente un canal d'introduction (17, 17a), formé ou délimité par deux surfaces de guidage (15, 16; 15a, 16a) parallèles ou sensiblement parallèles, pour l'axe (18) à monter ou pour l'élément de verrouillage (44), canal dans lequel l'élément de blocage (11, 11a) peut être engagé latéralement par pivotement par effet de ressort.

7. Dispositif de montage et de verrouillage selon la revendication 6, caractérisé par le fait que dans le boîtier de montage ou de verrouillage (10, 10a) est ménagé un évidement (23, 23a), correspondant aux contours de l'élément de blocage (11, 11a), qui sert à la réception de l'élément de blocage (11, 11a) lorsque celui-ci se trouve en position déverrouillée, et que, en position déverrouillée de l'élément de blocage (11, 11a), une surface latérale (24, 24a) de celui-ci fait en même temps partie de l'une des deux surfaces de guidage (15, 16; 15a, 16a) du canal d'introduction (17, 17a).

8. Dispositif de montage et de verrouillage selon la revendication 6 ou 7, caractérisé par le fait que, à l'extrémité fermée du canal d'introduction (17, 17a), est réalisée une surface d'appui (20, 20a) élastique pour l'axe (18) à monter ou pour l'élément de verrouillage (44).

9. Dispositif de montage et de verrouillage selon la revendication 8, caractérisé par le fait que la surface d'appui (20, 20a), ou la partie (21, 21a) qui la forme, est réalisée à la manière d'une lame de ressort et, sur le côté tourné vers l'axe (18) ou l'élément de verrouillage (44), courbée de façon convexe sous forme d'un arc.

10. Dispositif de montage et de verrouillage selon une ou plusieurs des revendications précédentes, caractérisé par le fait que sur la surface (19) de l'élément de blocage (11, 11a), coopérant avec l'axe (18) à monter ou l'élément de verrouillage (44), est formée une partie en contre-dépouille (29) qui, en position déverrouillée de l'élément de blocage (11, 11a), coopère avec une partie en contre-dépouille (30) correspondante dans le boîtier de montage ou de verrouillage (10).

11. Dispositif de montage et de verrouillage selon une ou plusieurs des revendications précédentes, caractérisé par le fait que sur le boîtier de verrouillage (10a) est formée d'une seule pièce, perpendiculairement ou en substance perpendiculairement au plan principal médian du boîtier, une plaque de fixation (41) au moyen de laquelle le boîtier de verrouillage (10a) peut être fixé sur le dossier de siège arrière d'un véhicule automobile, que la plaque de fixation (41) présente une ouverture de passage (43) pour l'élément de verrouillage (44), reliée au canal d'introduction (17a) pour l'élément de verrouillage (44), et que l'élément de verrouillage (44) est fixé côté carrosserie et est disposé par rapport au boîtier de verrouillage (10a) de telle manière que, lors d'un pivotement du dossier (34) de siège arrière, il puisse être amené en prise avec le boîtier de verrouillage (10a) et (en position déverrouillée de l'élément de blocage (11a)) être amené hors de prise d'avec le boîtier de verrouillage (10a) (fig. 6 à 9).

12. Elément de montage et de verrouillage selon la revendication 11, caractérisé par le fait que l'élément de verrouillage (44) est réalisé sous forme d'un U, de manière que, en position de verrouillage, les branches de U (45, 46) se trouvent respectivement des deux côtés du canal d'introduction (17a), à l'extérieur du boîtier de verrouillage (10a), et d'une part l'âme (47) du U se trouve en appui contre la surface d'appui (20a) du canal d'introduction (17, 17a) et d'autre part l'élément de blocage (11a), engagé dans le canal d'introduction (17a), se trouve derrière ladite âme.

Fig.1

Fig. 2

Fig. 3

Fig. 4

Fig. 7

Fig. 5

Fig. 9

Fig. 8

Fig. 6

— 39 —